# EUROPEAN PATENT SPECIFICATION

(11) **EP 3 142 294 B1**
(45) Date of publication and mention of the grant of the patent: **11.07.2018**
(21) Application number: 15002664.9
(22) Date of filing: 14.09.2015
(51) Int. Cl.: H04L 12/12, H04W 52/02, G06F 1/26

(54) **INTERACTION BETWEEN A DATA NETWORK LINE AND AN ELECTRICAL POWER SUPPLY LINE AND A DEVICE**
INTERAKTION ZWISCHEN EINER DATENNETZWERKLEITUNG UND EINER STROMVERSORGUNGSLEITUNG UND EINER VORRICHTUNG
INTERACTION ENTRE UNE LIGNE DE RÉSEAU DE DONNÉES, UNE LIGNE D'ALIMENTATION ÉLECTRIQUE ET UN DISPOSITIF

(43) Date of publication of application: 15.03.2017
(73) Proprietor: ABB AG, 68309 Mannheim (DE)
(72) Inventor: Dzung, Dacfey, 5430 Wettingen (CH); Angelosante, Daniele, 5300 Turgi (CH); John, Dirk, 76199 Karlsruhe (DE); Maret, Yannick, 5405 Dättwil (CH)

(56) References cited:
- US-A1- 2009 125 743
- US-A1- 2013 080 794

## Description

The application refers to a method for interaction between a data network line and an electrical power supply line on the side of a building and a device connected to the data network line and the electrical power supply line on the side of a user, whereby in times of data traffic (in)activity (no) data transmission is occurring or (no) service is requested by the device.

The application also refers to an interface unit for connecting a data network line and an electrical power supply line on the side of a building and a device connected to the data network line and an electrical power supply line on the side of a user, whereby in times of data traffic (in)activity (no) data transmission is occurring or (no) service is requested by the device.

The application also refers to a system comprising a data network line and an electrical power supply line on the side of a building and a device connected to the data network line and the electrical power supply line on the side of a user, and an interface unit for connecting the data network line and the electrical power supply line to the device.

The application refers to the technical field of connecting electrical devices to data networks.

US 2009/125743A1 describes a power distribution apparatus for use with a suite of master and peripheral devices, comprising a master electrical outlet and at least one slave electrical outlet, both connectable to a common electrical power supply. The apparatus further comprising a monitoring means for monitoring USB bus signals, associated with a master device such as a personal computer, and a controller for interrupting power to the at least one slave electrical outlet in response to the monitoring means detecting a prescribed change in the data traffic of the master device.

US 2013/080794A1 discloses a wireless controller system with a USB includes a wireless controller and a power socket device.

One known technique in this area is the "wireless local area network" (WLAN) technology that allows electronic devices to network, mainly using the 2.4 gigahertz and 5 gigahertz band.

Wi-Fi is a non-profit organization that promotes certain standards of WLAN interoperability and certifies Wi-Fi products if they conform to these standards.

In general English, the term "Wi-Fi" is often used as a synonym for WLAN, since most modern WLANs are based on these standards.

So Wi-Fi is an ubiquitous technology that allows electronic devices to exchange data and to connect devices to the Internet wirelessly using ISM radio bands. Many devices can use Wi- Fi, e.g., PC, smartphones, tablet computers and smart appliances.

These can connect to the wireless LAN network resource such as the Internet via a wireless network access point, also known as router.

Routers are usually connected to the Ethernet home-data line with an Ethernet data plug and to the electrical power supply line with an electrical plug. Regardless of its utilization, a router draws a significant amount of electrical energy. It is always ready to receive request for services and to accept new devices. Typically, modern WLAN routers can draw up to 20W also during the night. This is quite a high energy consumption, if accumulated over a year.

The same holds for any electronic device or home appliance connected to a digital data network like the internet. For example, modern TV sets have digital TV modems integrated which allow for a streaming of digital data, like movies, from the internet to the TV device. There are also digital TV modems as separate boxes for interfacing between an elder TV set without built-in modem and the internet. These TV sets or these TV boxes can consume up to 20 W even if no TV streaming occurs.

So it is the objective of the present application to provide a method for interaction between a data network line and an electrical power supply line on the side of a building and a device connected to the data network line and the electrical power supply line on the side of a user, said method achieving a significantly reduced overall energy consumption of the device.

It is a further objective of the present invention to provide an interface unit for connecting a data network line and an electrical power supply line on the side of a building and a device connected to the data network line and an electrical power supply line on the side of a user which is suitable to achieve a significantly reduced energy consumption of the device.

It is a further objective of the present application to provide a system comprising a data network line and an electrical power supply line on the side of a building and a device connected to the data network line and the electrical power supply line on the side of a user, said system resulting in a significantly reduced energy consumption.

The objective underlying the present application is achieved by a method according to claim 1, by an interface unit according to claim 10, and by a system according to claim 13.

So according to the present invention, the method comprises the steps of
- pre-setting a data-traffic-inactivity-switch-off-threshold time,
- automatically monitoring the data traffic between the device and the data network line,
- detecting a time of data traffic inactivity,
- determine if the time of data traffic inactivity exceeds the data-traffic-inactivity-switch-off-threshold time, and if yes, switching off the electrical power supply to the device.

So the method according to the invention provides that the device automatically detects, by monitoring data traffic, for example either the Ethernet or the Wi-Fi traffic, that no data transmission is currently occurring or that no service are currently requested by devices connected to the network. After a certain time, the device is then switched off automatically by interrupting the power supply to the device. The device does not need to be manually pre-programmed, nor should it be manually switched off. It is automatically switched off when it is not used.

A private internet user will typically not use his devices connected to the internet, like computer connected via a WLAN router or a smart digital TV set during the night. Modern WLAN routers, for example, can draw up to 20W also during the night. Assuming that, at least, 50% of this energy can be saved, a careful utilization of the WLAN router alone can save up to 100-150 kWh per year. Depending on the energy cost in the specific location, this energy cost can translate in a saving of 40 EUR per year per router. This cost could be simply achieved by automatically switching the WLAN router off during the night, applying the method according to the present invention.

The only manual operation required is the switching on. So according to a preferred embodiment, the method further comprises the step of switching on the power supply prior to data transmission occurring to the device from the data network line or service being requested by the device from the data network line.

This can occur via Bluetooth Low Energy or with a Voice command or a short range wireless signal. So according to a preferred embodiment, switching on the power supply is initiated by a Bluetooth low energy signal or a short-range wireless signal, such as for example a ZigBee signal, a WiFi signal, or a visible light or an infrared light signal.

According to a preferred embodiment, the device is a network access point or a wireless network access point or a separate router device or an electronic device actively using and processing data received from the data network or a digital television set, such as for example a digital television modem, or a wall-mounted smart-plug device combining power- and data plugs.

The key difference with respect to the known concepts of connecting devices like a Wi-Fi router to the internet is that the user is obliged to switch the Wi-Fi router on, while the switch off is automatically done. Therefore, the energy saving is seemingly guaranteed. For minimal user intervention, the device like the Wi-Fi router might learn usage pattern and automatically switch on the device. For instance, if every day on the weekdays a Bluetooth request is sent at 6am to turn on the Wi-Fi, the device might simply switch the Wi-Fi on at 6am without user intervention. So according to a preferred embodiment, switching on the power supply is automatically initiated at pre-set switch-on times. And according to a preferred embodiment, the user's data traffic transmission usage is automatically evaluated to achieve self-learning capabilities for automatically switching on the power supply adapted to the user's data traffic transmission usage behavior.

According to a preferred embodiment, the device is an electronic device actively using and processing data received from the data network, such as, according to a preferred embodiment, a digital television set or a digital television modem.

According to the invention, an interface unit for connecting a data network line and an electrical power supply line on the side of a building and a device connected to the data network line and an electrical power supply line on the side of a user, whereby in times of data traffic (in)activity (no) data transmission is occurring or (no) service is requested by the device, comprises
- a breaker unit for interrupting the power supply line,
- a memory device containing at least a pre-settable data-traffic-inactivity-switch-off-threshold time,
- a data-traffic-monitoring unit for automatically monitoring the data traffic between the device and the data network line,
- a data traffic inactivity detecting unit for detecting a time of data traffic inactivity,
- a determination unit for determining if the time of data traffic inactivity exceeds the data-traffic-inactivity-switch-off-threshold time, and
- an actuation unit functionally coupled to the breaker unit for initiating a switching off of the electrical power supply to the device in case the time of data traffic inactivity exceeds the data-traffic-inactivity-switch-off-threshold time.

According to a preferred embodiment, the interface unit comprises a microprocessor unit, and the memory device is part of the microprocessor unit, and the data-traffic-monitoring unit, data traffic inactivity detecting unit, determination unit and actuation unit are sub-systems of the microprocessor unit, preferably program modules of the application program of the microprocessor. Memory device, data-traffic-monitoring unit, data traffic inactivity detecting unit, determination unit and actuation unit could also be realized as electronic circuitry in hardware, or as a mix of hardware and microprocessor-based electronic sub-assemblies.

According to a preferred embodiment, the interface unit further comprises a Bluetooth low energy communication unit or a short-range wireless communication unit functionally coupled to the actuation unit or the breaker unit. According to a preferred embodiment, the short range wireless communication unit is a ZigBee communication unit or a WiFi communication unit, or a visible light communication unit or an infrared light communication unit.

According to a preferred embodiment the interface unit further comprises a voice command communication unit functionally coupled to the actuation unit or the breaker unit.

According to the invention, a system comprising a data network line and an electrical power supply line on the side of a building and a device connected to the data network line and the electrical power supply line on the side of a user, and an interface unit for connecting the data network line and the electrical power supply line to the device, the system is configured to perform the procedure as described above.

According to a preferred embodiment the device is a network access point or a wireless network access point or a separate router device or an electronic device actively using and processing data received from the data network or a digital television set or a digital television modem or a wall-mounted smart-plug device combining power- and data plugs.

According to a preferred embodiment the interface unit is arranged in a plug-unit separate from the device.

According to a preferred embodiment the interface unit is embedded within the device.

The invention and its embodiments will become even more apparent from the examples described below in connection with the appended drawings which illustrate:
- Fig. 1: a first embodiment with the interface unit being arranged in a plug-unit separate from the device, here a Wi-Fi router,
- Fig. 2: a second embodiment with the interface unit being embedded within the device, here a digital TV modem,
- Fig. 3: a third embodiment with the interface unit being embedded in a wall-mounted smart-socket device combining power- and data plugs.

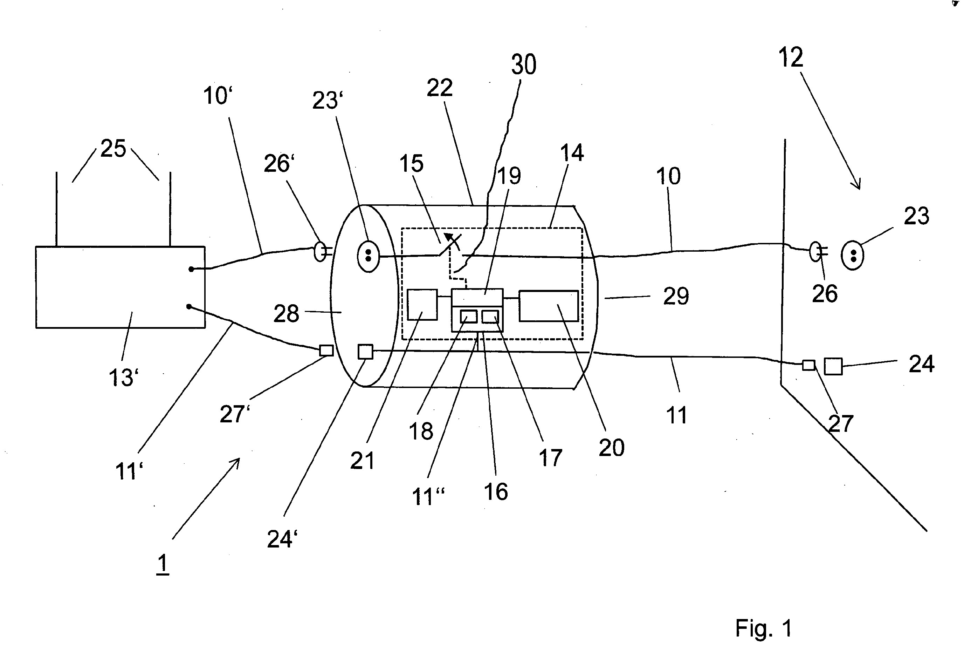

Looking at figure 1, this shows an embodiment of the present invention with an external Wi-Fi - plug 22 that connects a Wi-Fi router 13' with the typical antennae 25 to an electrical power line socket 23 and a data network socket 24, here an Ethernet socket 24, both sockets 23, 24 being installed at a wall within a building 12. Ethernet is here described in a non-limiting way as an example for a data network, other networks using different data network protocols are also comprised by the present invention.

The Wi-Fi router 13' would normally be connected for power supply purposes by means of a power supply line 10 with a power plug 26 to the power socket 23. It would be connected data-network wise by means of a data network line 11 with a data network plug 27 to the data network socket 24. According to the invention, a smart Wifi Access point plug 22 is interfaced between the Wi-Fi router 13' and the power socket 23 and the data network socket 24. The smart Wifi Access point plug 22 has on its router-side 28 a power socket 23' matching the power plug 26' on the power line 10' connected to the Wi-Fi router 13'. It has on its router-side 28 further a data network socket 24' matching the data network plug 26' on the data network line 11' connected to the Wi-Fi router 13'. On its building side 29 it is equipped with a power supply line 10 having a power plug 26 and with a data network line 11 having a data network plug 27.

The power supply line 10 is connected through the Wi-Fi plug 22 to the router side 28. It is interrupted by a breaker unit 15. By means of the breaker unit 15, the power supply line 10 within the Wi-Fi-plug 22 can be interrupted and / or closed.

The data network line 11 is connected through the Wi-Fi-plug 22 to its router side. It has a branch data conduit 11" to a data traffic monitoring unit 16. By means of the branch data conduit 11" the data traffic monitoring unit 16 is able to monitor the data traffic on the data network line 11 between the Wi-Fi router 13' and the data network socket 24 at the wall.

The data traffic monitoring unit 16 is part of an interface unit 14 within the Wi-Fi plug 22.

The data traffic monitoring unit 16 further has a memory device (not shown in the figures) containing at least a pre-settable data-traffic-inactivity-switch-off-threshold time. The data-traffic-monitoring unit 16 automatically monitors the data traffic between the Wi-Fi router 13' and the data network socket 24 at the wall. As an example only, here the data-traffic-monitoring unit is a microprocessor system, which comprises various sub-system, such as a data traffic inactivity detecting unit 17 for detecting a time of data traffic inactivity, a determination unit 18 for determining if the time of data traffic inactivity exceeds the data-traffic-inactivity-switch-off-threshold time, and an actuation unit 19 functionally coupled to the breaker unit 15, the functional coupling being indicated by the dotted line 30, for initiating a switching off of the electrical power supply to the Wi-Fi router 13' in case the time of data traffic inactivity exceeds the data-traffic-inactivity-switch-off-threshold time.

So the data traffic is monitored by the microprocessor based data-traffic-monitoring unit 16 in order to detect network inactivity. Once inactivity is detected, the microprocessor initiates, via its actuation unit 19 and its functional coupling to the beaker unit 15, the interruption of the power supply to the Wi-Fi router 13'. Interruption is triggered only if the time of network inactivity exceeds a data-traffic-inactivity-switch-off-threshold time which is stored in a memory device, and which by user input can be pre-set and changed if required. This is meant to avoid unreasonable frequent interruption of power supply to the Wi-Fi router 13' in case of only short-time data inactivity.

The microprocessor-based data traffic monitoring unit 16 is ready to process eventual Bluetooth low energy or Voice commands to turn the power supply to the Wi-Fi plug on again, on users demand. For this purpose the interface unit 14 has a Bluetooth low energy communication unit 20 and / or a voice command communication unit 21, both functionally connected to the actuation unit 19.

The data-traffic-monitoring unit 16, data traffic inactivity detecting unit 17, determination unit 18 and actuation unit 19 are sub-systems of the microprocessor-based interface unit 14, here in the example they are program modules of the application program of the microprocessor. Memory device, data-traffic-monitoring unit 16, data traffic inactivity detecting unit 17, determination unit 18 and actuation unit 19 could also be realized as electronic circuitry in hardware, or as a mix of hardware and microprocessor-based electronic sub-assemblies.

Figure 1 shows a WiFi router as an example for a device 13' that combines with an interface unit 14, said interface unit 14 being arranged in a plug unit 22 separate from the device 13'. The device could be also any other electronic device using data from a data network line and power from a power line, such as a TV set or a smart TV modem or the like.

In such a configuration, for turning on the device 13', the user will first have to turn on the interface unit 14 within the plug unit 22. Before that, the device will not react as no power is applied to it, if the interface device 14 is in the off-mode. Turning on the interface device will give power to the device 13', and then the user can turn on the device 13' if required.

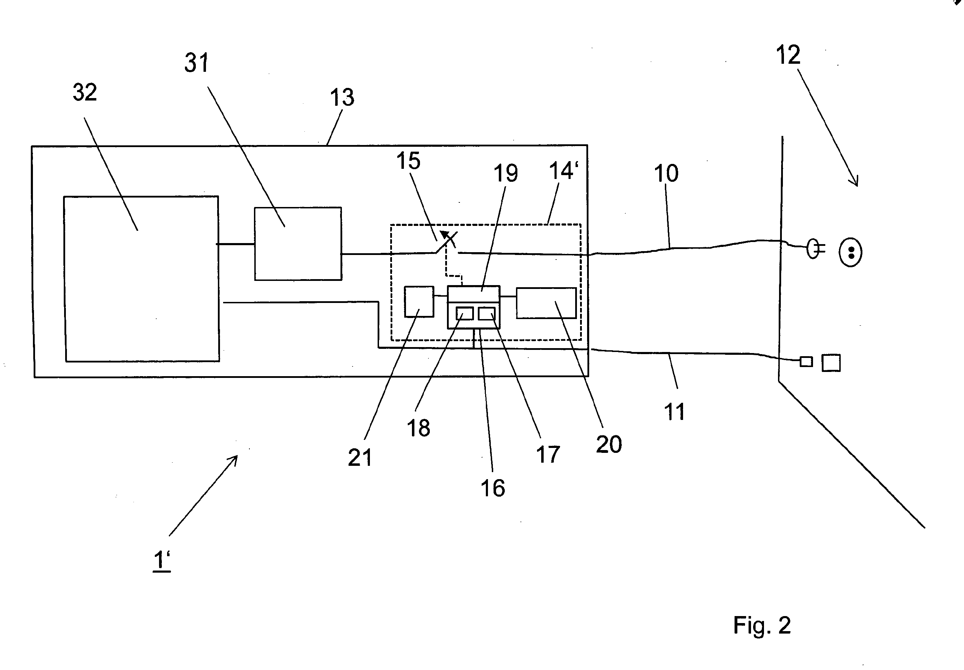

The same inventive concept can be applied when the interface unit 14' is implemented or embedded within the device 13, see figure 2. An example for such a device, figure 2 shows for example a digital TV modem 13.These TV boxes can consume up to 20 W even if no TV streaming occurs. In figure 2 it is shown that an interface unit 14', designed and operating equivalent to the interface unit 14 as described above in figure 1, is integrated in the form of a digital box smart plug 14' in a digital TV modem box 13. It would, in a way equivalent to the one described above, monitor absence of streaming and switch off the digital TV box if no streaming is done. The electrical power supply line 10 is here connected through to the power supply unit 31 of the digital TV box 13. The data network line 11 is connected through to the signal processing unit 32 of the digital TV box 13.

The digital box smart plug 14' could be embedded with the same LED as the TV box, so that the digital box smart plug 14' could be closed when the digital TV box is switched on again. The user might just need to push the ON button twice, i.e., the first time to switch on the digital box smart plug 14', the second time to switch on the digital TV box.

It is to be noted that turning off the Wi-Fi router 13', or any other device that is actively used by the consumer, such as the digital TV box 13, during the night usually presents the largest savings potential. While consumers could do so by setting up a plug with an integrated timer, most do not because of the required programing effort and lack of flexibility. For example, using the router during the period when the interface unit 14, 14' has turned it off is not easy as the device needs then to be reprogrammed. In addition, it is tedious to use the Wi-Fi network when it is switched off, as the plug would have to be re-programmed or bypassed. The method according to the present invention could thus be also used to learn the day/night pattern of the consumer and to set up automatically the timer. Furthermore, by monitoring the data traffic transmission usage, the power would not be prematurely turned off if the consumer decides to stay up a while longer from time to time: a timer using the method according to the present invention would be able to adapt to the current situation, learning the data consumption pattern of the user by monitoring the data traffic on the data network.

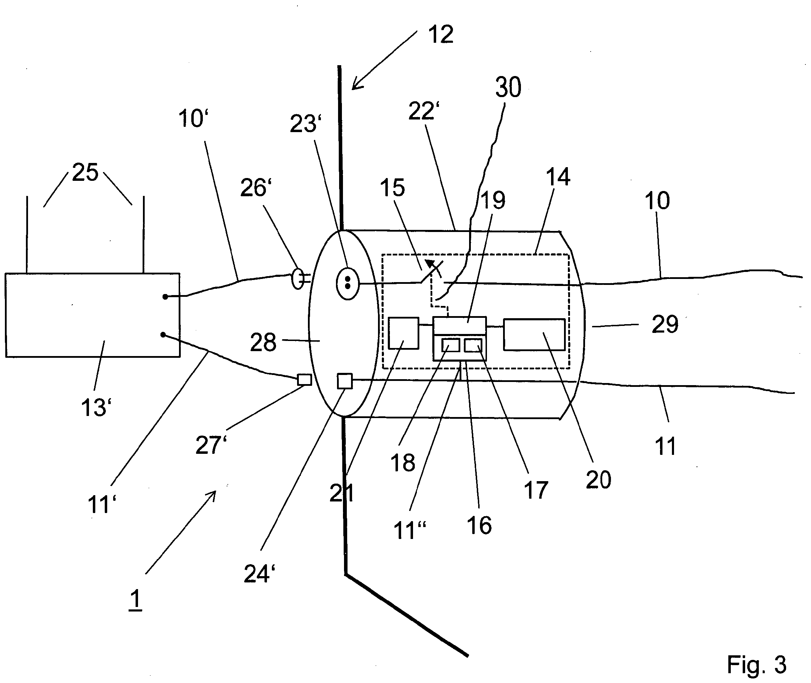

Figure 3 shows a third embodiment of the invention. Here the interface unit 14 is embedded in a wall-mounted smart-socket device 22' combining power- and data plugs 23', 24'.

**List of reference signs**

| | | | |
|---|---|---|---|
| 1 | system | 27 | data network plug |
| 1' | system | 27' | data network plug |
| 10 | electrical power supply line | 28 | router side of Wi-Fi plug |
| 10' | electrical power supply line | 29 | building side |
| 11 | data network line | 30 | dotted line representing functional coupling |
| 11' | data network line | | |
| 11" | branch data conduit | 31 | power supply unit |
| 12 | building | 32 | signal processing unit |
| 13 | device, digital TV box | | |
| 13' | device, Wi-Fi router | | |
| 14 | interface unit | | |
| 14' | interface unit, integrated | | |
| 15 | breaker unit | | |
| 16 | data traffic monitoring unit | | |
| 17 | data traffic inactivity detecting unit | | |
| 18 | determination unit | | |
| 19 | actuation unit | | |
| 20 | Bluetooth communication unit | | |
| 21 | voice command communication unit | | |
| 22 | Wi-Fi plug | | |
| 22' | wall mounted smart socket | | |
| 23 | electrical power line socket | | |
| 23' | electrical power line socket | | |
| 24 | Ethernet socket | | |
| 24' | Ethernet socket | | |
| 25 | antenna | | |
| 26 | power plug | | |
| 26' | power plug | | |

## Claims

1. A method for interaction between a data network line (11) and an electrical power supply line (10) on the side of a building (12) and a device (13, 13') connected to the data network line (11') and the electrical power supply line (10') on the side of a user, whereby in times of data traffic (in)activity (no) data transmission is occurring or (no) service is requested by the device (13, 13'), comprising the steps of
- pre-setting a data-traffic-inactivity-switch-off-threshold time ,
- automatically monitoring the data traffic between the device (13, 13') and the data network line (11),
- detecting a time of data traffic inactivity,
- determine if the time of data traffic inactivity exceeds the data-traffic-inactivity-switch-off-threshold time, and if yes, switching off the electrical power supply to the device (13, 13'), **characterised by** a step of switching on the power supply prior to data transmission occurring to the device (13, 13') from the data network line (11) or service being requested by the device (13, 13') from the data network line (11),
- wherein switching on the power supply is initiated by a short range wireless signal and the short range wireless signal is a ZigBee signal, a visible light or an infrared light signal.

2. A method according to claim 1, wherein switching on the power supply is automatically initiated at pre-set switch-on times.

3. A method according to claim 1, wherein the user's data traffic transmission usage is automatically evaluated to achieve self-learning capabilities for automatically switching on the power supply adapted to the user's data traffic transmission usage behavior.

4. A method according to any of the preceding claims, wherein the device (13') is a network access point or a wireless network access point or a separate router device or an electronic device actively using and processing data received from the data network or a digital television set or a digital television modem or a wall-mounted smart-plug device combining power- and data plugs.

5. An interface unit (14) for connecting a data network line (11) and an electrical power supply line (10) on the side of a building (12) and a device (13, 13') connected to the data network line (11') and an electrical power supply line (10') on the side of a user, whereby in times of data traffic (in)activity (no) data transmission is occurring or (no) service is requested by the device (13, 13'), wherein the interface unit (14) comprises
- a breaker unit (15) for interrupting the power supply line,
- a memory device containing at least a pre-settable data-traffic-inactivity-switch-off-threshold time ,
- a data-traffic-monitoring unit (16) for automatically monitoring the data traffic between the device (13, 13') and the data network line (11),
- a data traffic inactivity detecting unit (17) for detecting a time of data traffic inactivity,
- a determination unit (18) for determining if the time of data traffic inactivity exceeds the data-traffic-inactivity-switch-off-threshold time, and
- an actuation unit (19) functionally coupled to the breaker unit (15) for initiating a switching off of the electrical power supply to the device (13, 13') in case the time of data traffic inactivity exceeds the data-traffic-inactivity-switch-off-threshold time, **characterised by** the interface unit (14) further comprises a short-range wireless communication unit functionally coupled to the actuation unit (19) or the breaker unit (15) and the short range wireless communication unit is a ZigBee communication unit or a visible light communication unit or an infrared light communication unit.

6. An interface unit (14) according to claim 5, wherein the interface unit (14) further comprises a voice command communication unit (21) functionally coupled to the actuation unit (19) or the breaker unit (15).

7. A system (1, 1') comprising a data network line (11) and an electrical power supply line (10) on the side of a building (12) and a device (13, 13') connected to the data network line (11, 11') and the electrical power supply line (10, 10') on the side of a user, and an interface unit (14) according to claim 10, for connecting the data network line (11) and the electrical power supply line (10) to the device (13, 13'), the system (1, 1') being configured to perform the procedure according to any of claims 1 to 5.

8. A system (1) according to claim 7, wherein the device (13, 13') is a network access point or a wireless network access point or a separate router device or an electronic device actively using and processing data received from the data network or a digital television set or a digital television modem or a wall-mounted smart-socket device combining power- and data plugs.

9. A system (1) according to claim 7, wherein the interface unit (14) is arranged in a plug-unit separate from the device (13').

10. A system (1') according to claim 7, wherein the interface unit (14) is embedded within the device (13).

## Patentansprüche

1. Verfahren für eine Interaktion zwischen einer Datennetzwerkleitung (11) und einer elektrischen Stromversorgungsleitung (10) auf der Seite eines Gebäudes (12) und einer Vorrichtung (13, 13'), die mit der Datennetzwerkleitung (11') und der elektrischen Stromversorgungsleitung (10') verbunden ist, auf der Seite eines Benutzers, wobei zu Zeiten einer Datenverkehrs(in)aktivität eine (keine) Datenübertragung erfolgt oder ein (kein) Dienst von der Vorrichtung (13, 13') angefordert wird, folgende Schritte umfassend
- Voreinstellen einer Datenverkehrsinaktivitätsabschaltschwellenzeit,
- automatisches Überwachen des Datenverkehrs zwischen der Vorrichtung (13, 13') und der Datennetzwerkleitung (11),
- Detektieren einer Zeit der Datenverkehrsinaktivität,
- Bestimmen, ob die Zeit der Datenverkehrsinaktivität die Datenverkehrsinaktivitätsabschaltschwellenzeit überschreitet, und wenn ja, Abschalten der elektrischen Stromversorgung zur Vorrichtung (13, 13'), **gekennzeichnet durch**
einen Schritt des Einschaltens der Stromversorgung, bevor eine Datenübertragung von der Datennetzwerkleitung (11) zur Vorrichtung (13, 13') erfolgt oder von der Datennetzwerkleitung (11) von der Vorrichtung (13, 13') ein Dienst angefordert wird,
- wobei das Einschalten der Stromversorgung von einem drahtlosen Kurzbereichssignal initiiert wird und das drahtlose Kurzbereichssignal ein ZigBee-Signal, ein Sichtbarlicht- oder ein Infrarotlichtsignal ist.

2. Verfahren nach Anspruch 1, wobei das Einschalten der Stromversorgung zu voreingestellten Einschaltzeiten automatisch initiiert wird.

3. Verfahren nach Anspruch 1, wobei die Datenverkehrsübertragungsnutzung des Benutzers automatisch beurteilt wird, um, angepasst an das Datenverkehrsübertragungsnutzungsverhalten des Benutzers, Selbstlernfähigkeiten zum automatischen Einschalten der Stromversorgung zu erreichen.

4. Verfahren nach einem der vorhergehenden Ansprüche, wobei die Vorrichtung (13') ein Netzwerkzugangspunkt oder ein drahtloser Netzwerkzugangspunkt oder eine separate Routervorrichtung oder eine elektronische Vorrichtung, die vom Datennetzwerk empfangene Daten aktiv nutzt und verarbeitet, oder ein digitales Fernsehgerät oder ein digitales Fernsehmodem oder eine wandmontierte intelligente Steckervorrichtung, die Strom- und Datenstecker kombiniert, ist.

5. Schnittstelleneinheit (14) zum Verbinden einer Datennetzwerkleitung (11) und einer elektrischen Stromversorgungsleitung (10) auf der Seite eines Gebäudes (12) und einer Vorrichtung (13, 13'), die mit der Datennetzwerkleitung (11') und einer elektrischen Stromversorgungsleitung (10') verbunden ist, auf der Seite eines Benutzers, wobei zu Zeiten einer Datenverkehrs(in)aktivität eine (keine) Datenübertragung erfolgt oder ein (kein) Dienst von der Vorrichtung (13, 13') angefordert wird, wobei die Schnittstelleneinheit (14) Folgendes umfasst
- eine Unterbrechungseinheit (15) zum Unterbrechen der Stromversorgungsleitung,
- eine Speichervorrichtung, die mindestens eine voreinstellbare Datenverkehrsinaktivitätsabschaltschwellenzeit enthält,
- eine automatische Datenverkehrsüberwachungseinheit (16) zum automatischen Überwachen des Datenverkehrs zwischen der Vorrichtung (13, 13') und der Datennetzwerkleitung (11),
- eine Datenverkehrsinaktivitätsdetektionseinheit (17) zum Detektieren einer Zeit der Datenverkehrsinaktivität,
- eine Bestimmungseinheit (18) zum Bestimmen, ob die Zeit der Datenverkehrsinaktivität die Datenverkehrsinaktivitätsabschaltschwellenzeit überschreitet, und
- eine Betätigungseinheit (19), die funktionsmäßig an die Unterbrechungseinheit (15) gekoppelt ist, um in einem Fall, in dem die Datenverkehrsinaktivität die Datenverkehrsinaktivitätsabschaltschwellenzeit überschreitet, ein Abschalten der elektrischen Stromversorgung der Vorrichtung (13, 13') zu initiieren,
**gekennzeichnet durch**
die Schnittstelleneinheit (14) ferner eine Kurzbereichsdrahtloskommunikationseinheit umfasst, die funktionsmäßig an die Betätigungseinheit (19) oder die Unterbrechungseinheit (15) gekoppelt ist, und die Kurzbereichsdrahtloskommunikationseinheit eine ZigBee-Kommunikationseinheit oder eine Sichtbarlichtkommunikationseinheit oder eine Infrarotlichtkommunikationseinheit ist.

6. Schnittstelleneinheit (14) nach Anspruch 5, wobei die Schnittstelleneinheit (14) ferner eine Sprachbefehlskommunikationseinheit (21) umfasst, die funktionsmäßig an die Betätigungseinheit (19) oder die Unterbrechungseinheit (15) gekoppelt ist.

7. System (1, 1'), das eine Datennetzwerkleitung (11) und eine elektrische Stromversorgungsleitung (10) auf der Seite eines Gebäudes (12) und eine Vorrichtung (13, 13'), die mit der Datennetzwerkleitung (11, 11') und der elektrischen Stromversorgungsleitung (10, 10') verbunden ist, auf der Seite eines Benutzers und eine Schnittstelleneinheit (14) nach Anspruch 10 zum Verbinden der Datennetzwerkleitung (11) und der elektrischen Stromversorgungsleitung (10) mit der Vorrichtung (13, 13'), wobei das System (1, 1') zum Durchführen der Prozedur nach einem der Ansprüche 1 bis 5 ausgelegt ist.

8. System (1) nach Anspruch 7, wobei die Vorrichtung (13, 13') ein Netzwerkzugangspunkt oder ein drahtloser Netzwerkzugangspunkt oder eine separate Routervorrichtung oder eine elektronische Vorrichtung, die vom Datennetzwerk empfangene Daten aktiv nutzt und verarbeitet, oder ein digitales Fernsehgerät oder ein digitales Fernsehmodem oder eine wandmontierte intelligente Buchsenvorrichtung, die Strom- und Datenstecker kombiniert, ist.

9. System (1) nach Anspruch 7, wobei die Schnittstelleneinheit (14) in einer von der Vorrichtung (13') separaten Steckereinheit angeordnet ist.

10. System (1') nach Anspruch 7, wobei die Schnittstelleneinheit (14) in die Vorrichtung (13) eingebettet ist.

## Revendications

1. Procédé pour l'interaction entre une ligne de réseau de données (11) et une ligne d'alimentation électrique (10) du côté d'un bâtiment (12) et un dispositif (13, 13') relié à la ligne de réseau de données (11') et à la ligne d'alimentation électrique (10') du côté d'un utilisateur, dans lequel une émission de données se produit ou un service est demandé par le dispositif (13, 13') lors des périodes d'activité de trafic de données et aucune émission de données ne se produit ni aucun service n'est demandé par le dispositif (13, 13') lors des périodes d'inactivité de trafic de données, le procédé comprenant les étapes consistant à
- prédéfinir une durée de seuil de coupure sur inactivité de trafic de données,
- surveiller automatiquement le trafic de données entre le dispositif (13, 13') et la ligne de réseau de données (11),
- détecter une durée d'inactivité de trafic de données,
- déterminer si la durée de l'inactivité de trafic de données dépasse la durée de seuil de coupure sur inactivité de trafic de données et, si oui, couper l'alimentation électrique fournie au dispositif (13, 13'),
le procédé étant **caractérisé par** une étape consistant à mettre en marche l'alimentation électrique avant qu'une émission de données ne se produise vers le dispositif (13, 13') en provenance de la ligne de réseau de données (11) ou qu'un service ne soit demandé par le dispositif (13, 13') à la ligne de réseau de données (11),
- dans lequel procédé la mise en marche de l'alimentation électrique est effectuée par un signal sans fil de courte portée, le signal sans fil de courte portée étant un signal ZigBee, un signal de lumière visible ou un signal de lumière infrarouge.

2. Procédé selon la revendication 1, dans lequel la mise en marche de l'alimentation électrique est effectuée automatiquement à des instants de mise en marche prédéfinis.

3. Procédé selon la revendication 1, dans lequel l'utilisation de l'émission de trafic de données de l'utilisateur est évalue automatiquement en vue de l'obtention de capacités d'auto-apprentissage pour la mise en marche automatique de l'alimentation électrique d'une manière adaptée à l'utilisation de l'émission de trafic de données par l'utilisateur.

4. Procédé selon l'une quelconque des revendications précédentes, dans lequel le dispositif (13') est un point d'accès de réseau ou un point d'accès de réseau sans fil ou un dispositif routeur séparé ou un dispositif électronique activement en train d'utiliser et de traiter des données reçues du réseau de données ou un poste de télévision numérique ou un modem de télévision numérique ou un dispositif mural à branchement intelligent combinant des prises d'alimentation et de données.

5. Unité d'interface (14) servant à relier une ligne de réseau de données (11) et une ligne d'alimentation électrique (10) du côté d'un bâtiment (12) et un dispositif (13, 13') relié à la ligne de réseau de données (11') et à une ligne d'alimentation électrique (10') du côté d'un utilisateur, dans laquelle une émission de données se produit ou un service est demandé par le dispositif (13, 13') lors des périodes d'activité de trafic de données et aucune émission de données ne se produit ni aucun service n'est demandé par le dispositif (13, 13') lors des périodes d'inactivité de trafic de données, l'unité d'interface (14) comprenant
- une unité de disjonction (15) servant à couper la ligne d'alimentation électrique,
- un dispositif de mémoire contenant au moins une durée de seuil de coupure sur inactivité de trafic de données pouvant être prédéfinie,
- une unité de surveillance de trafic de données (16) servant à surveiller automatiquement le trafic de données entre le dispositif (13, 13') et la ligne de réseau de données (11),
- une unité de détection d'inactivité de trafic de données (17) servant à détecter une durée d'inactivité de trafic de données,
- une unité de détermination (18) servant à déterminer si la durée de l'inactivité de trafic de données dépasse la durée de seuil de coupure sur inactivité de trafic de données et
- une unité d'actionnement (19) couplée de manière fonctionnelle à l'unité de disjonction (15) pour effectuer une coupure de l'alimentation électrique fournie au dispositif (13, 13') dans le cas où la durée de l'inactivité de trafic de données dépasse la durée de seuil de coupure sur inactivité de trafic de données,
l'unité d'interface (14) étant **caractérisée en ce qu'**elle comprend également
une unité de communication sans fil de courte portée couplée de manière fonctionnelle à l'unité d'actionnement (19) ou à l'unité de disjonction (15), l'unité de communication sans fil de courte portée étant une unité de communication ZigBee ou une unité de communication à lumière visible ou une unité de communication à lumière infrarouge.

6. Unité d'interface (14) selon la revendication 5, l'unité d'interface (14) comprenant également une unité de communication à commande vocale (21) couplée de manière fonctionnelle à l'unité d'actionnement (19) ou à l'unité de disjonction (15) .

7. Système (1, 1') comprenant une ligne de réseau de données (11) et une ligne d'alimentation électrique (10) du côté d'un bâtiment (12) et un dispositif (13, 13') relié à la ligne de réseau de données (11, 11') et à la ligne d'alimentation électrique (10, 10') du côté d'un utilisateur, et une unité d'interface (14) selon la revendication 10, servant à relier la ligne de réseau de données (11) et la ligne d'alimentation électrique (10) au dispositif (13, 13'), le système (1, 1') étant conçu pour effectuer la procédure selon l'une quelconque des revendications 1 à 5.

8. Système (1) selon la revendication 7, dans lequel le dispositif (13, 13') est un point d'accès de réseau ou un point d'accès de réseau sans fil ou un dispositif routeur séparé ou un dispositif électronique activement en train d'utiliser et de traiter des données reçues du réseau de données ou un poste de télévision numérique ou un modem de télévision numérique ou un dispositif mural à branchement intelligent combinant des prises d'alimentation et de données.

9. Système (1) selon la revendication 7, dans lequel l'unité d'interface (14) est agencée dans une unité de branchement séparée du dispositif (13').

10. Système (1) selon la revendication 7, dans lequel l'unité d'interface (14) est intégrée à l'intérieur du dispositif (13).
